# EUROPÄISCHE PATENTSCHRIFT

(11) **EP 2 235 661 B1**
(45) Veröffentlichungstag und Bekanntmachung des Hinweises auf die Patenterteilung: **05.12.2012**
(21) Anmeldenummer: 09704230.3
(22) Anmeldetag: 22.01.2009
(51) Int. Cl.: G06K 7/00, G06K 7/08, G06K 19/07, H01Q 7/00, H04B 1/38, H01Q 1/22

(54) **RFID-LESEGERÄT**
RFID READ DEVICE
APPAREIL DE LECTURE RFID

(30) Priorität: 22.01.2008 AT 862008
(43) Veröffentlichungstag der Anmeldung: 06.10.2010
(73) Patentinhaber: Evva Sicherheitstechnologie GmbH, 1120 Wien (AT)
(72) Erfinder: SZALCSAK, Karl, B., A-3002 Purkersdorf (AT)
(74) Vertreter: Keschmann, Marc
(86) Internationale Anmeldenummer: PCT/AT2009/000021
(87) Internationale Veröffentlichungsnummer: WO 2009/092124

(56) Entgegenhaltungen:
- US-A- 6 046 683
- US-A1- 2005 156 039
- US-A1- 2005 258 966
- US-A1- 2006 192 007
- US-B1- 6 427 065

## Beschreibung

Die Erfindung bezieht sich auf ein Lesegerät für Nahfeld- oder RFID-Anwendungen zum Auslesen von passiven Transpondern, wobei das Lesegerät über zwei voneinander getrennte Antennen verfügt, wobei die eine Antenne für das Senden von Daten und für die Energieübertragung an den Transponder ausgebildet und mit einer Energiequelle verbunden ist und die andere Antenne für das Empfangen von Daten ausgebildet und mit einer Demodulationsschaltung verbunden ist. Die Erfindung bezieht sich weiters auf die Verwendung eines Lesegerätes für Zutrittskontrollsysteme.

Ein Lesegerät der eingangs genannten Art ist der US 2006/0192007 A1 zu entnehmen. Ein Lesegerät mit zwei Antennen ist aus US 2005/0258966 A1 und aus US 2005/0156039 A1 bekannt.

Lesegeräte der eingangs genannten Art werden beispielsweise für die Zeiterfassung und die Zutrittskontrolle von Bauwerken eingesetzt, wobei die übliche in der Schließtechnik eingesetzte RFID-Technologie im Allgemeinen im Nahfeld betrieben wird. Mit anderen Worten bedeutet dies, dass der Abstand zwischen dem Lesegerät und dem RFID-Transponder maximal einige Zentimeter betragen soll. Die in diesem Zusammenhang eingesetzten RFID-Transponder sind in unterschiedlicher Ausbildung bekannt geworden. Der Aufbau eines Transponders sieht prinzipiell eine Antenne, einen analogen Schaltkreis zum Empfangen und Senden (Transceiver) sowie einen digitalen Schaltkreis und einen permanenten Speicher vor. RFID-Transponder können hierbei über mehrfach beschreibbare Speicher verfügen, in denen während der Lebensdauer verschiedene Informationen abgelegt werden können.

Die der Anwendung entsprechende und gewünschte möglichst kleine Bauweise wird hier in erster Linie mit passiven Transpondern erzielt. Derartige passive Transponder verfügen nicht über eine eigene Energiequelle. Die für den Betrieb erforderliche Energie muss vom Lesegerät zur Verfügung gestellt werden, wobei dies kontaktlos erfolgen soll. Prinzipiell funktioniert die Kommunikation hiebei so, dass das Lesegerät (Reader) ein hochfrequentes, elektromagnetisches Wechselfeld erzeugt, welches die Antenne des RFID-Transponders beleuchtet. In der Antenne entsteht, sobald sie in das elektromagnetische Feld gelangt, ein Induktionsstrom, welcher nach Gleichrichtung zum Aufladen eines Kondensators als Kurzzeitspeicher eingesetzt werden kann. Dieser Strom versorgt den Chip mit der erforderlichen Energie. Der auf diese Weise aktivierte Mikrochip im RFID-Transponder kann nun gewünschtenfalls Befehle vom Lesegerät empfangen, die dieser "Reader" in sein elektromagnetisches Feld moduliert. Der Mikrochip erzeugt eine Antwort und moduliert durch Feldschwächung im kontaktfreien Kurzschluss oder per Reflexion das vom Lesegerät ausgesendete Feld. Diese Belastungsmodulation des RFID-Transponders muss vom Lesegerät wieder ausgewertet werden. Im Rahmen dieser Belastungsmodulation sendet der Transponder beispielsweise seine eigene unveränderliche Seriennummer, weitere Identifikationsdaten und andere vom Lesegerät abgefragte Daten. Prinzipiell sendet der Transponder selbst kein Feld aus, sondern verändert nur das elektromagnetische Sendefeld des Lesegerätes.

Zur Übertragung von Energie als auch von Daten wird eine Art "Transformator mit Luftkopplung" eingesetzt, wobei sich eine Wicklung im Lesegerät und die andere Wicklung im RFID-Transponder befindet. Bei Annäherung der beiden Spulen werden diese elektromagnetisch gekoppelt und können somit Energie und Daten übertragen. Die Energie des RFID-Transponders wird vom Lesegerät in Form eines Trägersignals zur Verfügung gestellt, welches zusätzlich amplitudenmoduliert sein kann, um ggf. Daten des Lesegerätes zum RFID-Transponder zu senden. Durch die nachfolgende Belastung des Trägersignals in einem Frequenzband weit unter der Trägerfrequenz können die Daten des RFID-Transponders zurückgesendet werden. Mit anderen Worten heißt dies, dass das Lesegerät nun die Belastungsmodulation erkennen muss, um sie zu demodulieren und zu decodieren. Bei den üblichen Lesegeräten wird für alle diese Funktionen, nämlich für die Energieversorgung, für das Senden von Daten und für das Empfangen von Daten, die selbe Antenne bzw. die selbe Spule verwendet, wodurch die zur Verfügung stehende Fläche optimal genutzt werden kann.

Prinzipiell ergibt sich bei einer derartigen Anordnung jedoch eine Komplikation in der Schaltungstechnik dergestalt, dass die sendestufe für den Energietransfer und ggf. das Senden der Daten eine niedrige Ausgangsimpedanz aufweisen sollte, um die Verlustleistung in der Schaltung zu minimieren, damit ein Maximum an Energie für den RFID-Transponder zur Verfügung gestellt werden kann. Im Gegensatz hierzu sollte zum Auswerten der Belastungsmodulation des RFID-Transponders ein hochohmiger Antennenabschluss zur Verfügung stehen, damit die durch die Belastungsmodulation verursachten Spannungsänderungen der Trägerhüllkurve einfach und mit besserem Störabstand ausgewertet werden können. Um ein derartiges Problem zu lösen, müssten zusätzliche Reaktanz-Bauteile vorgesehen werden, deren Platzbedarf bei immer größeren Anforderungen an eine Miniaturisierung einen erheblichen Nachteil darstellen.

Die Erfindung zielt nun darauf ab, bei unverändert kleiner Bauweise die eingangs aufgezeigten Komplikationen in der Schaltungstechnik zu vermeiden und die Möglichkeit zu schaffen, bei möglichst hoher Energieübertragung die durch die Belastungsmodulation verursachten Spannungsänderungen in der Trägerhüllkurve mit besserem Störabstand auszuwerten.

Zur Lösung dieser Aufgabe sieht die Erfindung bei einem Lesegerät der eingangs genannten Art, das über zwei voneinander getrennte Antennen verfügt, wobei die eine Antenne für das Senden von Signalen bzw. Daten und/oder die Energieübertragung an den Transponder ausgebildet und mit einer Energiequelle verbunden ist und die andere Antenne für das Empfangen von Signalen bzw. Daten ausgebildet und mit einer Demodulationsschaltung verbunden ist, vor, dass die Antenne für das Senden von Daten und die Energieübertragung eine niedrigere Impedanz aufweist als die Antenne für das Empfangen von Signalen. Dadurch, dass zwei voneinander getrennte Antennen vorgesehen sind, kann die jeweilige Antenne selbst bzw. die als Antenne verwendete Spule so ausgebildet sein, dass den jeweils optimalen Widerständen bzw. Impedanzwerten Rechnung getragen werden kann, wobei die Ausbildung so getroffen ist, dass die Antennen in der jeweiligen Schaltung voneinander verschiedene Impedanz aufweisen. Mit einer derartigen Ausbildung wird es möglich, für die Energieversorgung die gewünschte niedrige Ausgangsimpedanz in schaltungstechnisch einfacher Weise zu realisieren und die für die Auswertung der Belastungsmodulation besonders vorteilhafte hochohmige Ausbildung für die Auswertung der Daten des RFID-Transponders mit besserem Störabstand heranzuziehen. Die Ausbildung ist hierbei erfindungsgemäß so getroffen, dass die Antenne für das Senden von Signalen bzw. Daten und/oder die Energieübertragung eine niedrigere Impedanz aufweist als die Antenne für das Empfangen von Signalen bzw. Daten.

Die Antenne für das Senden von Signalen bzw. Daten und/oder die Energieübertragung, die bevorzugt eine niedrigere Impedanz aufweist, ist mit einer Energiequelle verbunden, insbesondere ist die Antenne Teil eines von einer Wechselstromquelle gespeisten Schwingkreises. Das entsprechende Wechselfeld wird durch die von den Transponderdaten gesteuerte Veränderung einer Last an der Antenne des Transponders, d.h. durch Lastmodulation verändert. Mit einer Demodulationsschaltung im Lesegerät, welche der Antenne, die für das Empfangen von Signalen bzw. Daten ausgebildet ist und eine höhere Impedanz aufweist, nachgeschaltet ist, können die vom Transponder aufmodulierten Daten gewonnen und in geeigneter Weise weiterverarbeitet werden.

Wie bereits eingangs erwähnt, können die Antennen mit Vorteil von Spulen gebildet sein.

Prinzipiell können die voneinander getrennten Antennen über einen Mittelabgriff einer Spule realisiert werden, wobei die gesamte Spule die höhere Impedanz zur Folge hätte, als der jeweilige Spulenabschnitt bis zum Mittelabgriff. Um bei einer derartigen Ausbildung die gegenseitige Beeinflussung der jeweils für das Senden und Empfangen erforderlichen Schaltungsanordnungen so gering wie nur möglich zu halten, ist mit Vorteil die Ausbildung so getroffen, dass die Antennenspulen voneinander galvanisch getrennt ausgebildet sind, wobei mit Vorteil die beiden Antennenspulen konzentrisch angeordnet sind. Mit einer derartigen Ausbildung gelingt es, eine optimal an die jeweiligen Bedürfnisse angepasste Sendestufe und Sendespule sowie eine entsprechende für das Empfangen des schwachen Lastmodulationssignals ausgelegte Empfangsspule bereitzustellen, wodurch die gewünschte Verbesserung des Störabstandes mit geringem baulichen Aufwand erzielt wird. Gleichzeitig wird die Möglichkeit geschaffen, das Sende- und Empfangsverhalten des Lesegerätes ohne wechselseitige Beeinflussung getrennt zu optimieren. Prinzipiell eignet sich die erfindungsgemäße Ausbildung für die regional verschiedenen verwendeten Frequenzen, wobei die Vorteile besonders deutlich bei Hochfrequenz-Transpondern und der in diesem Zusammenhang verwendeten Lastmodulation zu Tage treten. Im UHF-Bereich können unterschiedlich orientierte Antennen für die polarisierte Ausstrahlung bzw. einen in der jeweils anderen Richtung polarisierten, zurückgesandten Signalanteil eingesetzt werden.

In besonders bevorzugter Weise werden die beschriebenen Lesegeräte für Zutrittskontrollsysteme eingesetzt, da hier zumeist eine große Zahl von verschiedenen Transpondern rasch und fehlerfrei erkannt werden muss.

## Patentansprüche

1. Lesegerät für Nahfeld- oder RFID-Anwendungen zum Auslesen von passiven Transpondern,
wobei das Lesegerät über zwei voneinander getrennte Antennen verfügt,
wobei die eine Antenne für das Senden von Daten und für die Energieübertragung an den Transponder ausgebildet und mit einer Energiequelle verbunden ist
und die andere Antenne für das Empfangen von Daten ausgebildet und mit einer Demodulationsschaltung verbunden ist,
**dadurch gekennzeichnet**
**dass** die Antenne für das Senden von Daten und die Energieübertragung eine niedrigere Impedanz aufweist als die Antenne für das Empfangen von Signalen.

2. Lesegerät nach Anspruch 1, **dadurch gekennzeichnet, dass** die Antennen von Spulen gebildet sind.

3. Lesegerät nach Anspruch 2, **dadurch gekennzeichnet, dass** die Antennenspulen voneinander galvanisch getrennt ausgebildet sind.

4. Lesegerät nach Anspruch 2 oder 3, **dadurch gekennzeichnet, dass** die beiden Antennenspulen konzentrisch angeordnet sind.

5. Verwendung eines Lesegerätes nach einem der Ansprüche 1 bis 4 für Zutrittskontrollsysteme.

## Claims

1. A reader for near field or RFID applications for purposes of reading out from passive transponders,
wherein the reader features two antennae separated from one another,
wherein the one antenna is designed for the transmission of data and for the transfer of energy to the transponder, and is connected to an energy source,
and the other antenna is designed for the reception of data, and is connected to a demodulation circuit,
**characterised in that**
the antenna for the transmission of data and the transfer of energy has a lower impedance than the antenna for the reception of signals.

2. The reader in accordance with Claim 1, **characterised in that** the antennae are formed from coils.

3. The reader in accordance with Claim 2, **characterised in that** the antenna coils are designed to be galvanically isolated from one another.

4. The reader in accordance with Claim 2 or 3, **characterised in that** the two antenna coils are arranged concentrically.

5. The use of a reader in accordance with one of the Claims 1 to 4 for access control systems.

## Revendications

1. Appareil de lecture pour applications RFID- ou en champ proche en vue de la lecture de signaux de transpondeurs passifs,
dans lequel l'appareil de lecture dispose de deux antennes séparées l'une de l'autre,
dans lequel une des antennes est conçue pour l'émission de données et pour la transmission d'énergie au transpondeur et est reliée à une source d'énergie électrique
et l'autre antenne est conçue pour la réception de données et est reliée à un circuit de démodulation,
**caractérisé en ce que**
l'antenne pour l'émission de données et la transmission d'énergie présente une impédance moindre que l'antenne pour la réception de signaux.

2. Appareil de lecture selon la revendication 1, **caractérisé en ce que** les antennes sont formées par des bobines.

3. Appareil de lecture selon la revendication 2, **caractérisé en ce que** les bobines d'antenne sont conçues de manière séparées galvaniquement l'une de l'autre.

4. Appareil de lecture selon les revendications 2 ou 3, **caractérisé en ce que** les deux bobines d'antennes sont disposées concentriquement.

5. Utilisation d'un appareil de lecture selon une des revendications 1 à 4 pour des systèmes de contrôle d'accès.
